(19) Europäisches Patentamt
European Patent Office
Office européen des brevets

(11) **EP 1 641 561 B1**

(12) **EUROPEAN PATENT SPECIFICATION**

(45) Date of publication and mention
of the grant of the patent:
**09.01.2013   Bulletin 2013/02**

(51) Int Cl.:
*C10G 49/06* (2006.01)      *C10G 47/14* (2006.01)
*B01J 27/16* (2006.01)      *B01J 27/182* (2006.01)
*B01J 35/10* (2006.01)      *B01J 37/03* (2006.01)

(21) Application number: **04740340.7**

(22) Date of filing: **25.06.2004**

(86) International application number:
**PCT/EP2004/006933**

(87) International publication number:
**WO 2005/002726 (13.01.2005 Gazette 2005/02)**

(54) **Process for the hydrotreatment of hydrocarbons**

Verfahren zur Wasserstoffbehandlung von Kohlenwasserstoffen

Procédé d'hydrotraitement d'hydrocarbures

(84) Designated Contracting States:
**AT BE BG CH CY CZ DE DK EE ES FI FR GB GR HU IE IT LI LU MC NL PL PT RO SE SI SK TR**

(30) Priority:  **03.07.2003   IT MI20031362**

(43) Date of publication of application:
**05.04.2006   Bulletin 2006/14**

(73) Proprietor: **ENI S.p.A.**
**00144 Rome (IT)**

(72) Inventors:
 • **CALEMMA, Vincenzo**
  **I-20097 San Donato Milanese-Milan (IT)**
 • **FLEGO, Cristina**
  **I-20139 Milan (IT)**
 • **CARLUCCIO, Luciano, Cosimo**
  **I-20097 San Donato Milanese-Milan (IT)**
 • **PARKER, Wallace**
  **I-20068 Peschiera Borromeo-Milan (IT)**
 • **GIARDINO, Roberto**
  **I-20080 Besate-Milan (IT)**

 • **FARACI, Giovanni**
  **I-20097 San Donato Milanese-Milan (IT)**

(74) Representative: **Bottero, Carlo et al**
**Barzanò & Zanardo Milano S.p.A.**
**Via Borgonuovo, 10**
**20121 Milano (IT)**

(56) References cited:
 **EP-A- 0 529 923      EP-A- 0 748 652**
 **EP-A- 1 101 813      US-A- 3 271 299**

 • **PATENT ABSTRACTS OF JAPAN vol. 2002, no. 05, 3 May 2002 (2002-05-03) & JP 2002 028491 A (CATALYSTS & CHEM IND CO LTD), 29 January 2002 (2002-01-29)**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a process for the hydrotreatment of hydrocarbons in the presence of a bi-functional catalyst with a hydro-dehydrogenating activity.

Mixtures of mainly paraffinic hydrocarbons, including a significant fraction with a high boiling point, are normally obtained as distillation residues in refining processes of fuels of petroleum origin. Other mainly paraffinic products are, for example, so-called "slack waxes" which are obtained as by-product of the production of lubricating bases through the solvent extraction process.

These products are normally under solid or semi-solid form (waxes) at room temperature, particularly when prevalently linear, and do not allow direct use as fuel in the transport field. In order to upgrade these hydrocarbon mixtures, it is therefore necessary to subject them to degradation and/or upgrading processes to obtain products of greater interest, such as fuels, lubricants, solvents and other derivatives having improved characteristics. The improvement of the above-mentioned aspects has so far been obtained by subjecting the waxes to more or less complex processes of chain length reduction, in the presence of hydrogen (normally known by the English term hydrocracking) and hydro-isomerization.

At the same time, other hydrocracking and/or isomerization catalysts have been developed for the production of lubricating oils, having optimum performances in terms of composition and the isomerization degree of the lubricating bases obtained, starting from n-paraffin feedstocks. These hydrocracking processes are carried out in the presence of a bi-functional catalyst, containing a metal with a hydro-dehydrogenating activity supported on an inorganic solid normally consisting of an oxide or silicate with acidic characteristics.

Typically, hydrocracking catalysts include metals of groups 6 to 10 of the periodic table of elements (in the form approved by IUPAC and published by CRC Press Inc. in 1989, to which reference will be made hereinafter), especially nickel, cobalt, molybdenum, tungsten or noble metals such as palladium or platinum. Whereas the former are more suitable for processing hydrocarbon mixtures having relatively high sulphur contents, noble metals are more active but are poisoned by sulphur and require a feedstock which is essentially without this.

Supports which can be used for the purpose are various type of zeolites ($\beta$, Y), X-Al$_2$O$_3$ (where X can be Cl or F), silico-aluminas, the latter being amorphous or with various crystallinity degrees, or mixtures of crystalline zeolites and amorphous oxides. A very wide examination of the different catalysts, the specific characteristics and different hydrocracking processes based on the same, can be found, among the many available in literature, in the publication of J. Scherzer and A. J. Gruia "Hydrocracking Science and Technology", Marcel Dekker, Inc. Editor (1996).

It is also well known that the above-mentioned isomerization and hydrocracking processes are carried out under conditions wherein the conversion per passage of the high boiling fraction is rarely over 90% and is normally maintained at below 80%, especially to reduce the production of low value light fractions. The non-converted fraction can be recycled to the hydrocracking, or is separated and used for the production of lubricating bases. In this case it is necessary for the high-boiling residue to be subjected to further treatment (isomerization and/or dewaxing) whose purpose is to transform or separate the waxy fraction contained therein.

EP 0 529923 describes certain particular catalytic compositions consisting of amorphous solid solutions containing from 5 to 50% by weight of alumina, from 10 to 90% by silica and from 5 to 40% by weight of phosphate (as P$_2$O$_5$) which can be used as such or as carriers for metals with a catalytic activity in transformation processes of hydrocarbons such as those mentioned above, even if only their use in the production of medium distillates is illustrated.

The method used for preparing these solid solutions comprises the formation of a gel of the relative Si and Al hydroxides containing the desired quantity of phosphate, starting from a sol acidified with hydrochloric acid. The solid solutions thus obtained however are not entirely satisfactory when used in integrated processes for the upgrading of paraffinic mixtures with the purpose of obtaining a wide range of products. are not satisfactory.

One of the most relevant problems in the hydrocracking process of linear paraffin mixtures, consists in the difficulty of contemporaneously obtaining, from the same process, middle distillates with good characteristics at low temperatures and a 360+ °C fraction with suitable characteristics in terms of average molecular weight and isomerization degree, for the production of bases for lubricant oils. If a 150+ °C cut is subjected to hydrocracking using the catalytic systems currently in use and the reaction is carried out so as to obtain middle distillates having good characteristics at low temperatures, then one can see that the 360+ °C residue has too low a molecular weight and, consequently, the obtained lubricating base exhibit a low viscosity. When, on the contrary, the reaction is carried out so as to obtain a 360+ cut with a sufficiently high molecular weight, the yields of lubricating base are low, due to the presence of a still high quantity of linear paraffins, which makes a subsequent dewaxing step necessary and, in addition the cold properties of the middle distillates are not satisfactory.

No solution seems to have been found as yet for the above overall problems with respect to the processes and catalysts of the known art. Even though the use, as catalyst support, of certain particular amorphous micro-meso-porous silico-aluminas, as described in European patent application EP-A 1, 101, 813, is capable of providing an excellent equilibrium between gas oil and kerosene in the middle distillate fraction, it apparently does not also allow a fraction of lubricating base to be produced with optimal characteristics which enable it to be adopted without any further specific treatment.

It has now been surprisingly found that certain amorphous silico-aluminas with a low aluminum content, containing certain quantities of phosphorus, bonded to the oxide matrix, are advantageously suitable as active support in combination with one or more metals with a hydro-dehydrogenating function, for the preparation of a catalyst for refining processes such as the hydro-treatment of hydrocarbons for the production of fuels and bases for lubricating oils.

A first object of the present invention therefore relates to a process for the hydrotreatment of hydrocarbons carried out in the presence of a solid catalyst comprising:

(A) a support of an acidic nature consisting of a catalytically active porous solid, including silicon, aluminum, phosphorus and oxygen bonded to one another in such a way as to form a mixed amorphous solid forming a single phase, characterized by an Si/Al atomic ratio of between 20 and 250, a P/Al ratio of at least 0.1 and not higher than 3.5, preferably of between 0.3 and 3.5, a total pore volume ranging from 0.5 to 2.0 ml/g, an average pore diameter ranging from 3 nm to 40 nm, and a specific surface area ranging from 200 to 1000 $m^2$/g, preferably between 300 and 900 $m^2$/g;

(B) at least one metal with a hydro-dehydrogenating activity selected from groups 6 to 10 of the periodic table of elements, dispersed on said support (A) in an amount of between 0.05 and 5% by weight with respect to the total weight of the catalyst.

Other objects of the present invention will appear evident from the following description and claims.

The meaning of some of the terms used herein is defined hereunder, for the purpose of clarifying the description and claims of the present patent application and defining its scope:

- the term amorphous as used herein with reference to the porous support of the catalyst of the present invention and its compositions and uses, indicates a substantial absence of low angle X-ray scattering signals, according to the usual measuring technique described further on;
- "distillation temperature" referring to a hydrocarbon mix, indicates, when not otherwise specified, the head temperature or temperature range of a typical distillation column wherein said mixture is collected, at normal pressure (0.1009 MPa);
- the range definitions always include the extremes, when not otherwise specified, nevertheless, the term "range included" within two extremes, refers to any range between said extremes;.
- the term "hydrocracking" is used herein with the general meaning of catalytic treatment at a high temperature of a hydrocarbon mix, preferably including a fraction with a boiling point higher than 350°C, in the presence of hydrogen, obtaining a mixture with a lower boiling point; the hydrocracking treatment normally also includes so-called hydro-isomerization treatment, in so far as an isomerised product is obtained, having a boiling temperature lower than that of the feed mixture;
- the terms "kerosene" and "gas oil" as hereinafter used, refer to the two hydrocarbon fractions forming the so-called middle distillate, with a distillation temperature of between 140 and 280°C and between 240 and 380°C, respectively.

In its most general form, the acidic support (A) of the catalyst essentially comprises an amorphous homogeneous phase of mixed silicon, aluminum and phosphorus oxide, wherein the phosphorus is in the maximum oxidation state (+5) and is commonly bonded to the matrix of the other oxides by means of P-O-Al bonds, as determined by means of $^{27}$Al-NMR and $^{31}$P-NMR spectroscopic analysis. It has an extremely high surface area (determined by the BET method), preferably ranging from 300 to 900 $m^2$/g, more preferably from 400 to 800 $m^2$/g, and a pore size within the range of mesopores, preferably with an average diameter (determined by means of the DFT method) ranging from 5 to 30 nm, more preferably from 6 to 25 nm. The porosity (total pore volume as ml/g) is extremely high and can be regulated, within certain limits, through the times, temperatures and other operating parameters during the gel formation in the preparation process of said support. The porosity of the amorphous support preferably ranges from 0.7 to 1.7 ml/g.

From a morphological point of view, the catalytically active amorphous solid used in the present invention comprises a non-ordered network of pores with an essentially monomodal size distribution within a relatively wide range. The difference between 10% and 90% of the pore dimensions in the distribution curve is preferably within a range of diameters from 2 to 40 nm, preferably from 5 to 30 nm. The oxides forming the matrix are in turn arranged disorderly in a three-dimensional polymeric lattice, without forming crystalline structures detectable with X-rays.

Said acidic amorphous support prevalently consists of silicon oxide and is characterized by the presence of certain quantities of Al and P homogeneously bonded and distributed in the oxide matrix, so that the P/Al ratio is lower than 3.5 and at least equal to 0.1. For P/Al ratio values of 5 or higher, a substantial collapse of the porous structure is observed, with a considerable decrease in the catalytic and support properties; for P/Al values lower than 0.1, no substantial progress was observed with respect to a traditional amorphous silica and alumina matrix having an analogous composition. More advantageous results were obtained when the P/Al ratio ranges from 0.3 to 3.5, and particularly within the range of 0.5 to 2.5.

One of the essential characteristics of the catalyst used in the present invention is the selection in the support (A) of the aluminum content within a narrow and quantitatively limited range, which in turn determines the phosphorus content range. The Si/Al atomic ratio preferably ranges from 20 to 200, more preferably from 25 to 150.

Said amorphous support can also comprise, when necessary, smaller quantities of other components, in a mix or dispersed in the oxide matrix, in particular other metal compounds, especially oxides, different from those forming the component (B), suitable for giving particular characteristics or catalytic functions. Said additional components do not normally form more then 20% by weight of the amorphous solid, preferably up to 10% by weight. In particular, the catalyst support according to the present invention can contain, in a mixture, phosphorus oxides or phosphates not bonded to the matrix of amorphous silica and alumina. Other oxides which can be present are those of certain transition metals, particularly selected from Ti, Zr, V, Zn, Ga and Sn, whereas alkaline or alkaline earth metals are preferably absent or only present in traces. These metals can advantageously provide the amorphous solid of the present invention with improved mechanical properties and further catalytic functions, such as oxidation, which are requested for certain industrial processes.

Said amorphous support can be prepared by adapting various typical sol-gel methods for the preparation of micro- or meso-porous amorphous silico-alumina, by the addition of a suitable quantity of an appropriate phosphorus compound in any of the steps preceding calcination, preferably before or during the formation of gel. The phosphorus compound is preferably selected form organic or inorganic oxygenated compounds, capable of forming phosphorus oxide or a phosphate group after the oxidizing thermal treatment suitable for drying and calcining the gel, more preferably such as to avoid introducing traces of undesirable metals in the matrix of porous oxide obtained after calcination.

Sol-gel methods for the preparation of amorphous silico-aluminas which can be adapted for the purpose, are described, for example, in European patent applications EP-A 160,145, EP-A 340,868 and EP-A 659,478 or in the publication "Journal of Catalysis, Vol. 60 (1969), pages 156-166.

An advantageous preparation method of said amorphous active support (A), includes, in a first step, the preparation of a mixture comprising a tetra-alkyl ammonium hydroxide, an aluminum compound and a silicon compound, which can be hydrolyzed to the corresponding oxide hydrates, an oxygenated compound of phosphorus and a sufficient quantity of water to dissolve and hydrolyze said compounds, wherein said tetra-alkyl ammonium hydroxide comprises from 1 to 10 carbon atoms in each alkyl residue, said hydrolysable aluminum compound is preferably an aluminum trialkoxide comprising from 1 to 10 carbon atoms in each alkoxide residue, said hydrolysable silicon compound is a silicate of at least one hydrocarbon residue, preferably a tetra-alkyl ortho-silicate, comprising 1 to 10 carbon atoms for each alkyl residue, and said oxygenated phosphorus compound is a salt or phosphate or phosphonic ester or the corresponding acid, preferably an ammonium salt or a phosphate or phosphonic ester in which each alkyl residue comprises from 1 to 10 carbon atoms.

The aqueous mixture of the above compounds is then hydrolyzed and gelled in a second step, by heating in an alkaline environment, preferably at a pH greater than 10, either by refluxing in a closed vessel, at the normal boiling point or higher, or in an open vessel below this temperature, so that there is essentially no exchange of material with the outside. The gel thus produced is subsequently subjected to a third drying and calcination step.

The aqueous mixture in said first step can be made up in water or in a mixture of water and a soluble oxygenated organic compound, preferably an alcohol having from 1 to 10 carbon atoms, in a quantity of up to 1/1 in moles with respect to the water. More preferably, the oxygenated compound is an alcohol having from 2 to 5 carbon atoms. During the hydrolysis, a further quantity of alcohol is released into the aqueous solvent.

The tetra-alkyl ammonium hydroxide which can be used for the purposes of the present invention is selected, for example, from tetra-ethyl, propyl-, isopropyl-, butyl-, isobutyl-, terbutyl, and pentyl-ammonium hydroxide and among these tetra-propyl-, tetra-isopropyl- and tetra-butyl ammonium hydroxide are preferred. The aluminum trialkoxide is selected, for example, from aluminum triethoxide, propoxide, iso-propoxide, butoxide, iso-butoxide and terbutoxide and among these aluminum tri-propoxide and tri-iso-propoxide are preferred. The tetra-alkyl orthosilicate is selected for example from tetra-methyl-, tetra-ethyl-, propyl-, isopropyl-, butyl-, isobutyl-, terbutyl-, and pentyl-orthosilicate and among these, tetra-ethyl orthosilicate is preferred.

The oxygenated phosphorus compound is preferably selected from organic or inorganic compounds soluble in the reaction mixture, comprising a phosphate, phosphite or phosphonic group. According to an embodiment of the present invention, the phosphorus compound can also be formed in situ in the reaction mixture, or it can be added to said mixture in the form of a solution in a suitable solvent, preferably an alcohol or water. Typical phosphorus compounds suitable for the purpose are, for example, phosphoric acid, phosphorous acid, ammonium phosphate, quaternary ammonium phosphates with organic amines having from 1 to 5 carbon atoms for each residue bonded to the nitrogen atom, organic phosphites and phosphates of alcohols having from 1 to 10, preferably from 1 to 5 carbon atoms, acid phosphates of ammonium or quaternary ammonium, alkyl-phosphonates or alkyl-phosphinates of alkyl residues having from 1 to 10, preferably from 1 to 5, carbon atoms.

Particularly preferred phosphorus compounds are ammonium phosphate, acid ammonium phosphate and the corresponding quaternary phosphates with organic amines having from 1 to 4 carbon atoms per residue, especially in the form of a solution prepared by the addition in water of phosphoric acid and the corresponding stoichiometric quantity of ammonia or amine.

In the preparation of the aqueous mixture of said first step, the order of addition of the various reagents is not particularly critical. The phosphorus compound can be added or formed in situ initially, together with the addition of the tetra-alkyl ammonium hydroxide, by regulating the quantities so as to respect the desired final ratios between atoms and components, or it can be added after the introduction of the Si and Al compounds. The mixture is prepared at room temperature or a slightly higher value, preferably between 30 and 80°C. Although the thus formed mixture preferably consists of a limpid solution, certain compounds, such as aluminum alkoxide for example, can remain partially undissolved, but are completely dissolved in the heating step and hydrolysis of the subsequent step. In certain cases, a time of up to five hours under stirring may be necessary for obtaining a solution.

In the process for the preparation of said amorphous solid used according to the present invention, an aqueous solution is first prepared, containing the tetra-alkyl ammonium hydroxide and the aluminum trialkoxide, operating at a temperature which is sufficient to guarantee an effective dissolution of the aluminum compound, preferably from 40 to 80°C. The tetra-alkyl orthosilicate is added to said aqueous solution. If necessary, the pH is regulated to a value greater than 10, preferably between 11 and 12. This mixture is brought to a temperature which is suitable for triggering the hydrolysis reaction. Said temperature is in relation to the composition of the reaction mixture (normally from 60 to 120°C). The hydrolysis reaction is exothermic and therefore guarantees self-maintenance, once the reaction has been activated. The quantities of constituents of the mixture are selected so as to respect the atomic ratios between the elements to be obtained in the catalytically active solid at the end of the preparation; the following atomic or molar ratios are conveniently used: Si/Al from 20/1 to 250/1, (tetra-alkyl ammonium hydroxide)/Si from 0.05/1 to 0.2/1, $H_2O/SiO_2$ from 5/1 to 40/1, P/Al from 0.1 to 3.5. The preferred values for these ratios are: Si/Al from 20/1 to 150/1, (tetra-alkyl ammonium hydroxide) /Si from 0.05/1 to 0.2/1, P/Al from 0.5 to 3.5 and $H_2O/SiO_2$ from 10/1 to 25/1.

The hydrolysis of the reagents and their gelation are preferably effected operating at a temperature equal to or higher than the boiling temperature, at atmospheric pressure, of any alcohol which develops as by-product of said hydrolysis reaction, without eliminating or substantially eliminating said alcohols from the reaction environment. The hydrolysis and gelation temperature is therefore critical, and is conveniently maintained at values higher than about 65°C up to about 110°C. Furthermore, in order to maintain the alcohol which was developed, within the reaction environment, it is possible to operate in an autoclave at the autogenous pressure of the system at the preselected temperature (normally in the order of 0.11-0.15 MPa absolute), or at atmospheric pressure in a reactor equipped with a reflux condenser.

According to a particular embodiment of the process, the hydrolysis and gelation are carried out in the presence of a quantity of alcohol higher than that which develops as by-product. For this purpose, a free alcohol, preferably ethanol, is added to the reaction mixture in a quantity up to a maximum molar ratio between alcohol added and $SiO_2$ of 8/1.

The time necessary for completing the hydrolysis and gelation, under the conditions indicated above, usually varies from 10 minutes to 3 hours and is preferably in the order of 1-2 hours.

It has also been found useful to subject the gel thus formed to aging, by maintaining the reaction mixture in the presence of the alcohol and at room temperature, for a period in the order of 1-24 hours.

The alcohol is finally removed from the gel which is dried, operating according to the known art, so as to avoid fracturing of the solid and substantially maintaining the pore structure unaltered. Reduced pressure is normally applied, generally from 1 to 20 kPa and preferably from 3 to 6 kPa, together with a temperature ranging from 50 to 120°C, preferably from 100 to 110°C. According to a preferred method, the drying is effected operating with a gradient (or profile) of (increasing) temperatures and (decreasing) pressures within the above ranges to allow the gradual evaporation of the solvent. The dried gel is finally subjected to calcination in an oxidizing atmosphere (normally in air), at a temperature ranging from 500 to 700°C for a period of 4-20 hours and preferably from 500-600°C for 6-10 hours, also in this case preferably operating with a suitable temperature gradient.

The amorphous support based on silicon, aluminum and phosphorus, thus obtained, has a composition corresponding to that of the reagents used, considering that the reaction yields are practically complete. Therefore, the Si/Al atomic ratio varies from 20/1 to 250/1 in the preferred case, the most preferred values ranging from 20/1 to 150/1 and specifically in the order of 100/1. This support results substantially amorphous, when subjected to analysis by means of powder X-ray diffraction, it has a surface area of at least 200 $m^2$/g and normally within the range of 300-900 $m^2$/g and a pore volume of between 0.5-2.0 $cm^3$/g, preferably of between 0.6 and 1.8 $cm^3$/g.

According to what is known in the art with respect to heterogeneous catalysis, the above-mentioned amorphous support (A) used in the catalyst, can be advantageously mixed and processed with other inert compounds such as, for example, pseudo-bohemite which, for calcination, becomes γ-alumina, suitable for providing enhanced mechanical and morphological properties, desirable for industrial use, especially for improving the consistency and stability of the granules in the catalytic beds, thus increasing the durability, and for reducing the amounts of catalyst residues in the product obtained. The incorporation of said inert component, commonly called "binder", into the catalyst support, can be effected both by addition to the amorphous support (A) at the gel form, or after drying or calcination, and by addition to the preformed catalyst, including the metal (B). The addition to the support is, in any case, preferred for the purposes of the present invention.

Therefore, in accordance with a particular aspect, said support (A) can, when necessary, form a composition mixed with a suitable quantity of a binder consisting of an inert inorganic solid, generally added for the purpose of improving the mechanical properties, such as for example, silica, alumina, clay, titanium oxide ($TiO_2$) or zirconium oxide ($ZrO_2$), boron oxide ($B_2O_3$) or mixtures thereof. It is generally preferably, in fact, for its industrial applications, for said solid to be used in granular rather than powder form, and for it to have a relatively narrow particle-size distribution. Furthermore, it is preferably endowed with sufficient mechanical resistance to compression and impact to avoid its progressive breakage during use, due to the fluid-dynamic and vibration stress effected by the process fluids.

Possible binders can be all those which are known to be suitable for the purpose, both natural and synthetic, preferably silica and alumina, and particularly alumina in all its known forms, for example gamma-alumina.

Said reinforced amorphous solid used according to the present invention can be obtained by means of any of the mixing, extrusion and granulation (palletizing) methods of solid materials in a mixture, for example, according to the methods described in European patent applications EP-A 550,922 and EP-A 665,055, the latter preferred, both filed by the Applicant.

In particular, according to a preferred method, the gel obtained from the hydrolysis and gelation of the aqueous mixture of Al alkoxide, tetra-alkyl silicate and oxygenated phosphorus compound, prepared as described above, is mixed, before the calcination step, with the desired quantity of inorganic binder, based on the dry weight, normally with a weight ratio between binder and gel (humid) within the range of 0.05 to 0.5. A plasticizer, selected from those generally known to be suitable for the purpose, is also preferably added, for example methyl cellulose, stearine, glycerol, more preferably methyl cellulose, to favour the formation of a homogeneous mixture which can be easily processed. This plasticizer is generally added in a quantity ranging from 5 to 20 g per 100 g of binder.

A suitable acidifying compound, selected from organic acids, such as acetic acid or acetic anhydride, oxalic acid, or inorganic acids, such as hydrochloric acid or phosphoric acid, is then added in a quantity preferably ranging from 0.5 to 8 g per 100 g of binder. Acetic acid is particularly preferred.
The mixture thus obtained is homogenized by mixing and heating to a temperature ranging from 40 to 90°C, with partial evaporation of the solvent, until a paste is obtained, which is then extruded using suitable equipment. The extruded product is cut into cylindrical granules, preferably with a size of 2-10 mm in length and 0.5-4.0 mm in diameter. According to an alternative embodiment, the above homogeneous paste can also be dried in a suitable granulator, in order to obtain granules having the desired dimensions.

The granules thus obtained are subjected to progressive heating to eliminate the residual quantities of solvent and finally calcined in an oxidizing atmosphere, generally in a stream of air, at a temperature ranging from 400 to 600°C, for 4-20, preferably 6-12 hours.

A granular acid solid is thus obtained, having the desired catalytic and mechanical properties, containing a quantity of 1 to 70% by weight, preferably from 20 to 50% by weight, of said inert inorganic binder, the remaining percentage consisting of amorphous support (A), as previously defined. The granular solid is preferably in the form of pellets having a size of about 2-5 mm in diameter and 2-10 mm in length.

Both the porosity and surface area of the extruded product normally have average values with respect to the values of the single components in the mixture, according to linear composition rules.

The catalytically active amorphous support used in the present invention, both as such and mixed with other inert materials, has acidic characteristics. It is distinguished by the advantageous combination of a pore diameter and surface area which are both relatively high. According to the studies carried out by the Owner, this combination favours a particularly desirable catalysis selectivity and orientation, especially in hydro-treatment processes of hydrocarbons, and paraffins in particular, for example in the transformation processes of hydrocarbon fractions, such as hydrocracking, hydro-isomerization and dewaxing, with improved activity and selectivity with respect to the traditional amorphous silica-alumina gel, particularly when a range of products, from kerosene to the lubricating bases, is to be obtained, by reducing as much as possible the use of dewaxing steps, separated or subsequent to the hydrocracking step.

According to the present invention, the metal of component (B) of the catalyst is selected from those having a hydro-dehydrogenating activity, in the presence of hydrogen/hydrocarbons mixtures, under the suitable process conditions. Metals especially suitable for the purpose are those of groups 6 to 10 of the periodic table. Combinations of nickel with molybdenum, tungsten and cobalt as well as the noble metals platinum or palladium, or mixtures thereof, and preferably platinum and palladium, more preferably platinum, are of particular interest.

Combinations of metals of Group 6, especially tungsten or molybdenum, with the metal of group 9, especially nickel or cobalt, are particularly suitable, as is known for other catalysts of the art suitable for processing hydrocarbons, when the mixtures contain non-negligible amounts of sulphur and/or nitrogen.

Said catalyst used according to the present invention, can be prepared through a method which includes contact, under suitable conditions, of said active support (A) with a suitable compound of said metal (B). The metal is conveniently distributed as uniformly as possible on the porous surface of the support, in order to maximize the catalytic surface which is effectively active. For this purpose, various known methods can be used, such as those described for example in European patent application EP-A 582, 347. In particular, according to the impregnation method, the amorphous support (A), as such or preferably extruded, is put in contact with an aqueous or alcoholic solution of a soluble compound of the desired metal for a period sufficient to provide a homogeneous distribution of the metal in the solid. This normally requires from a few minutes to several hours, preferably under stirring. Soluble salts suitable for the purpose are, for example, $H_2PtF_6$, $H_2PtCl_6$, $[Pt(NH_3)_4]Cl_2$, $[Pt(NH_3)_4](OH)_2$ and analogous salts of palladium; mixtures of salts also of different metals are equally included in the scope of the invention. The minimum quantity of aqueous liquid (normally water or an aqueous mixture with a second inert liquid or with an acid in a quantity lower than 50% by weight) is conveniently used, which is sufficient to dissolve the salt and uniformly impregnate said support, preferably with a weight ratio solution/solid ranging from 1 to 3. The quantity of metal is selected on the basis of its concentration which is to be obtained in the catalyst, as the whole metal is fixed on the support.

At the end of the impregnation, the solution is evaporated and the solid obtained is dried and calcined in an inert or reducing atmosphere, under analogous temperature and time conditions as those cited above for the calcination of the amorphous solid or extruded product.

An alternative method to impregnation is the ion exchange system. According to the latter, the amorphous silica/alumina/phosphate solid is put in contact with an aqueous solution of a salt of the metal as in the previous case, but the deposition takes place by exchange under conditions made basic (pH between 8.5 and 11) by the addition of a sufficient quantity of an alkaline compound, normally an ammonium hydroxide. The suspended solid is then separated from the liquid by means of filtration or decanting and dried and calcined as specified above.

According to another alternative, the salt of the metal (B) can be included in the catalytically active support in the gel preparation step, for example before hydrolysis for the formation of humid gel, or before its calcination.

At the end, a catalyst is obtained for the hydrotreating of hydrocarbons, in accordance with the present invention, wherein metal M is uniformly dispersed in amounts ranging from 0.05 to 5% by weight, preferably from 0.1 to 2%, more preferably from 0.2 to 1% by weight, with respect to the total weight of the catalyst, especially when the metal is selected from Pt and Pd.

A typical method for the preparation of a catalyst in extruded form, comprising the active solid as support, includes the following steps:

(a) solution A is prepared of the hydrolysable components and ammonium phosphate as described above, in suitable quantities for obtaining the desired final composition;
(b) the above solution is heated to 60-70°C to cause its hydrolysis and gelation and to obtain a gel mixture with a viscosity ranging from 0.01 to 100 Pa • sec;
(c) a binder, belonging to the group of bohemites or pseudobohemites, is first added to the gel mixture, in a weight ratio with the same ranging from 0.05 to 0.5, followed by methyl cellulose as plasticizer in a quantity ranging from 10 to 20 g per 100 g of said binder; and finally a mineral or organic acid in a quantity ranging from 0.5 to 8.0 g per 100 g of said binder;
(d) the mixture obtained under point (c) is heated under mixing to a temperature ranging from 40° to 90°C until a homogeneous paste is obtained, which is subjected to extrusion and granulation;
(e) the extruded product obtained under (d) is dried and calcined in an oxidizing atmosphere.

In this way, a granular solid support is obtained, with an acidic catalytic activity, containing a quantity ranging from 30 to 70% by weight of inert inorganic binder, the remainder consisting of the active porous solid of silicon/aluminum/phosphorus oxide, having essentially the same characteristics of porosity, surface extension and structure as described above for the same porous solid without the binder. The granules are conveniently in the form of pellets having a size of about 2-5 mm in diameter and 2-10 mm in length.

The supporting step of the noble metal on the active granular solid is effected with the same procedure specified above.

Before use, the catalyst thus obtained is normally subjected to activation in a reducing atmosphere, according to one of the known methods suitable for the purpose, which can also be carried out directly in the reactor preselected for the hydrocracking reaction. A typical method uses the procedure described hereunder:

1) 2 hours at room temperature in a nitrogen stream;
2) 2 hours at 50°C in a stream of hydrogen;
3) heating to 310-360°C with an increase of 3°C/min in a stream of hydrogen;
4) constant temperature of 310-360°C for 3 hours in a stream of hydrogen and cooling to 200°C.

During the activation, the pressure in the reactor is maintained between 3.0 and 8,1 MPa (30 to 80 atm).

The catalyst used according to the present invention is advantageously used in processes for the hydrotreating of hydrocarbon, especially prevalently paraffinic fractions, particularly when they are linear.

Known hydrotreating processes are the processes for hydrorefining and hydroconverting hydrocarbon feeds such us petroleum cuts, cuts originating from coal, bituminous extracts, cuts from other refinery processes, more particularly for hydrogenation, hydroisomerisation, hydrodewaxing, dehydrogenation, hydrocracking, hydrodesulphuration and hydrodemetallization of carbon-containing feeds, especially containing naphthenic compounds and/or paraffininc compounds, the feeds possibly containing metals and/or nitrogen and/or oxygen and/or sulphur.

Hydrotreating processes of hydrocarbon feeds can be carried out in a continuous or batch reactor containing the catalyst of the invention in a fixed bed or as a slurry. Such hydrotreatments can be applied, for example, to petroleum fractions such as crude oils, atmospheric residues, vacuum residues, deasphalted oils, deasphalted vacuum residues, heavy fuels, atmospheric distillates and vacuum distillates.

In particular, using the present catalyst in a hydrocarbon hydrocracking process, it was possible to obtain, with an excellent yield, the conversion of heavy paraffin fractions (waxes with a boiling point of over 360+°C) into middle distillates having good properties at low temperatures, and contemporaneously produce a residue with a high content, preferably higher than 70% by weight, of lubricating base having a high viscosity index and a suitable viscosity especially for use in motor vehicle engines.

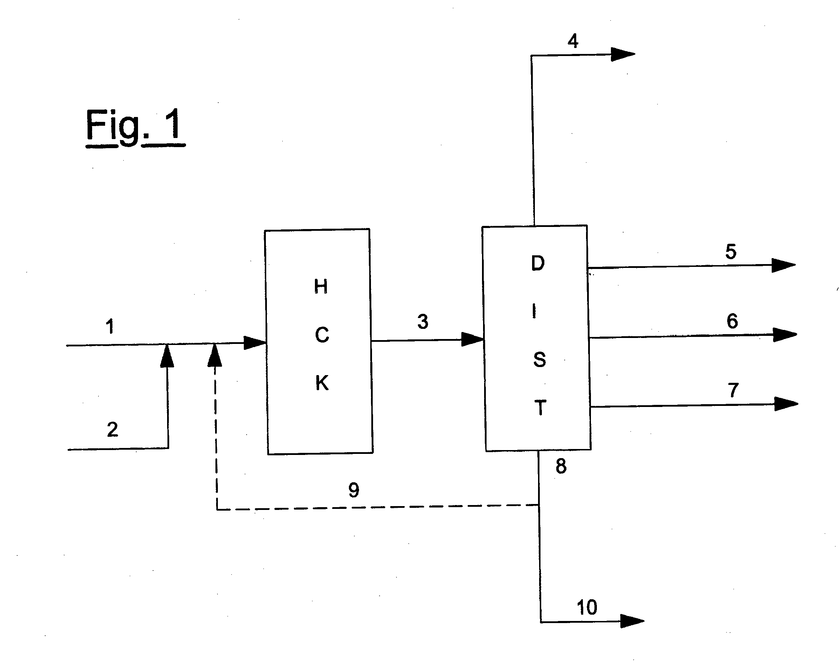

A typical embodiment of the process is described hereunder with reference to Figure 1, without limiting in any way the overall scope of the invention as claimed herein.

In particular, Figure 1 schematically illustrates a plant for the embodiment of the process, comprising a hydrocracking step and a distillation step of the product mix obtained.

According to the plant scheme of Figure 1, a stream 1 of substantially linear and preferably sulphur-free hydrocarbons is fed to the hydrocracking unit (HCK) of step (i) of the present process together with the necessary amount of hydrogen, through line 2.

An aliquot of residue 8 is also possibly fed to the same unit, through line 9, coming from the subsequent separation of the middle distillate, preferably having a boiling point over 350°C, in a mass ratio preferably ranging from 0 to 90%, more preferably between 10 and 30% with respect to the total residue volume.

The reaction product of the hydrocracking step, consisting of a hydrocarbon mix having an isomerization degree (non-linear hydrocarbon mass/mixture mass) preferably over 50%, more preferably over 70%, is fed, through line 3, to a separation step by distillation (DIST), preferably in a suitable column running at atmospheric pressure or slightly higher, from which the middle distillates, suitable as fuels according to the present invention, are collected by means of line 6 (kerosene) and 7 (gas oil). From the unit DIST in Figure 1, the following products are also obtained: through line 4 a gaseous fraction C1-C5, of little significance, and, through line 5, a hydrocarbon light fraction, preferably having a boiling point lower than 150°C (naphtha), in an overall amount advantageously lower than 20% by weight, preferably lower than 15, with respect to the hydrocarbon mix fed through line 1.

According to a particularly distinct aspect, the use of the above catalyst supported on a silico-alumino-phosphate amorphous solid in the hydrocracking step (i), allows a high quality middle distillate fraction to be obtained, with a high yield (low production of 150-°C volatile products), also having, in particular, excellent low temperature properties and a high cetane number, together with a high-boiling residue having a surprisingly low content of linear paraffins, which is particularly suitable for obtaining lubricating bases, either as such or after dewaxing treatment with advantageously reduced contact times and conversions.

In particular, it has been found that it is possible to obtain, by means of the present process, middle distillates having the following characteristics:

| | Kerosene (150-250°C) |
|---|---|
| Smoke point | > 50 mm |
| Flash point | > 40°C |
| Freezing point | < - 47°C |
| Aromatic compounds | < 0.1 % |
| Sulphur | < 0.1 ppm |
| | Gas oil (250 - 360°C) |
| B.C.N. | > 70 |
| Flash point | > 160°C |
| Pour point | < - 12°C |

(continued)

|  | Gas oil (250 - 360°C) |
|---|---|
| Aromatic compounds | < 0.1 % |
| Sulphur | < 0.1 ppm |

The residual fraction can be used as such for particular uses, or is preferably sent to a dewaxing step (not shown in Figure 1) for producing lubricating bases. According to a preferred aspect, it is partially recycled to the hydrocracking step (HCK) through line 9, for regulating the productivity of the process or varying the isomerization degree according to the production demands.

The isomerization degree of the residual fraction sent to line 20 is preferably higher than 85%.

As the amount of linear paraffins is reduced, the dewaxing step, when necessary, can be advantageously effected, according to the process of the present invention, under particularly favourable contact time and lubricating base yield conditions.

Said dewaxing step (DWX) can be effected according to the known techniques, both with a solvent and, preferably, in the presence of a catalyst suitable for the purpose. In this latter case, the partially isomerised mix is again reacted, in the presence of hydrogen and a suitable solid catalyst, preferably comprising a metal with a hydro-dehydrogenating activity, usually a noble metal, supported on a zeolite or other crystalline porous solid.

In this case, contrary to what takes place in solvent dewaxing, where the paraffin crystals are physically separated, the paraffins are selectively transformed into isoparaffin compounds or lighter cracking products, according to the catalyst used. The cracking products are mainly low molecular weight paraffins and olefins, partially (up to 50% by weight) consisting of C5- compounds, the remaining part being a material having a molecular weight within the gasoline range.

The catalytic materials mostly used are medium pore zeolites (such as mordenite, ZMS-5, SAPO-11) and, in some cases, large pore materials (such as beta zeolites and HY), but also other materials have been proposed. According to a particular embodiment, the catalyst according to the present invention can be selected for this purpose.

The catalytic dewaxing can be effected, according to use, at pressures which can vary from 2 to 20 MPa, offering higher operative pressures, advantages in terms of catalyst life cycle, higher yields and viscosity indexes of the de-waxed products. The preferred temperature conditions WABT and space velocity LHSV are those typical of hydrotreating, the WABT ranging from 315 to 400°C and LSHV from 0.3 to 1.5 h$^{-1}$.

Downstream of the catalytic dewaxing, a treatment is normally envisaged on a typical "finishing" catalyst for improving the colour and removing any traces of reactive molecules such as olefins, in order to confer a better stability to the product.

At the end of said dewaxing step, after removing the last residues (< 3% by weight) of volatile products formed as a result of the partial hydrocracking, a liquid, isomerized product is obtained having excellent properties at low temperatures and a high viscosity, having an initial boiling point of over 350°C, preferably > 360°C and with a distillation temperature (extrapolated) of 90% of the mix (T90) lower than 700°C (by extrapolation).

Some examples of practical embodiments are provided for a more detailed description of the present invention, which however are purely illustrative of some of the particular aspects of the invention and should in no way be considered as limiting its overall protection scope.

Examples

The following analysis and characterization methods were used for running the practical embodiments of the present invention:

- X-ray diffractometry from powders (XRD): the analysis was carried out using a vertical Philips X'PERT diffractometer equipped with a proportional pulsation meter and a secondary curved graphite crystal monochromator; two different measurements were effected for each sample: the first in the angular region $1.5 \leq 2\theta \leq 10°$ with a step of 0.05° $2\theta$ and accumulation times of 20s/step and fixed divergent slips of 1/6°; the second within the spectral range of $3 \leq 2\theta \leq 53°$ with a step of 0.05° 26 and accumulation times of 10s/step and fixed divergent slips of 1°; in both cases the radiation was CuK$\alpha$ ($\lambda$ = 1.54178 Å).

- The information on the characteristics of the catalysts under examination are deduced from the evaluation of the adsorption/desorption isotherms of $N_2$ at the temperature of the liquid $N_2$, obtained by using a ASAP 2010 instrument (Micrometrics) and a Sorptomatic 1990 (ex Carlo Erba).
  The samples (~ 0.3 g) have been degassed for 16 hours at 350°C at reduced pressure, before the acquisition of the isotherms.

- The total specific pore volume ($V_p$) was calculated using the Gurvitsch method at p/p° = 0.995. When the adsorption isotherms end with a plateau, it is possible to exclude phenomena due to macropores or inter-particles porosity, therefore a precise determination of this parameter is possible. When the isotherms do not end with a plateau, $V_p$ is only indicative.
- Measurement of the pore dimensions: the average pore diameter was determined by means of the DFT (density functional theory) method, of which details are provided in the publication of P.A. Webb and C. Orr, in "Analytical Methods in Fine Particle Technology", Micrometrics Instruments Corp. (1997), page 81.
- Measurement of the specific surface area: the specific surface area was evaluated by means of the BET linear graph with two parameters within the range of p/p° 0.01-0.2 applying the DFT (density functional theory) method.
- Pour point: according to the regulation ASTM D97
- Viscosity at 100 cSt: according to the regulation ASTM D445
- Viscosity index: according to the regulation ASTM D2270

Reagents and materials

The commercial reagents listed below were used during the preparations described in the examples:

| | |
|---|---|
| tetrapropyl ammonium hydroxide (TPA-OH) | SACHEM |
| aluminum triisopropoxide | FLUKA |
| tetraethyl silicate | DYNAMIT NOBEL |
| alumina (VERSAL 250, Pseudo-Boehmite) | LAROCHE |
| methyl cellulose (METHOCEL) | FLUKA |
| phosphoric acid | CARLO ERBA |

The reagents and/or solvents used and not indicated above are those most commonly used and can be easily found at the normal commercial suppliers specialized in the field.

Example 1: catalyst with P/Al = 1

239.50 ml of demineralized water, 3.40 g of an ammonia solution at 30% by weight and 2.30 g of a solution of phosphoric acid at 85% by weight (equivalent to 0.02 moles of tri-ammonium phosphate $(NH_3)_3PO_4$), are charged into a three-necked flask, equipped with a rod stirrer and a bubble cooler. 50.80 g of an aqueous solution at 40% by weight of tetrapropyl ammonium hydroxide (TPA-OH, 0.01 moles) and 4.08 g of aluminum tri-isopropoxide (0.02 moles) are added to the mixture thus prepared. The mixture is maintained under stirring at room temperature for about 60 minutes, until a limpid solution is obtained. 208 g of tetra-ethyl orthosilicate (TEOS; 1.00 moles) are rapidly added to this solution and the temperature is brought to 60°C, the whole mixture being maintained under stirring under these conditions for a further 3 hours. At the end the formation of a gel is observed, which is cooled to room temperature and left to rest for 20 hours. In this way a homogeneous gel is obtained, characterized by the following molar ratios between the constituents: Si/Al = 51; TPA-OH/Si = 0.098; $H_2O$/Si = 15; Si/P = 50.
The gel thus obtained is first dried in air for about 3 hours and then calcined by heating, still in a stream of air, at 550°C for 5 hours. At the end, an amorphous solid is obtained according to the present invention, identified by the following empirical formula: $SiAl_{0.02}P_{0.02}O_{2.08}$.
The complete absence of crystalline aggregates was confirmed by means of X-ray diffraction. By means of NMR spectroscopy applied to the $^{31}$P and $^{27}$Al isotopes, it was found that at least 80% of the phosphorus is bonded by Al-O-P bonds to the amorphous silico-alumina matrix. The results of the morphological analysis are summarized in Table 1 below.

EXAMPLES 2 and 3

The procedure according to the previous example 1 was repeated modifying each time the quantity of tri-ammonium phosphate initially produced by mixing ammonia and phosphoric acid in aqueous solution, so that the P/Al ratio in the gel ranges from 0.5 to 2 for Examples 2 and 3, respectively.
The results of the morphological analysis and elemental analysis are summarized in Table 1 below.

Example 4

The procedure of Example 1 was repeated exactly, with the only difference that the hydrolysis and gelation step is carried out in an ethanol/water mixture in which the molar ratios ethanol/$SiO_2$ = 8 and $H_2O$/$SiO_2$ = 8. At the end the product thus obtained is subjected to characterization according to the above techniques. The morphological data are indicated in Table 1 below.

Example 5

239.50 ml of demineralized water, 6.78 g of an ammonia solution at 30% by weight and 4.59 g of a solution of phosphoric acid at 85% by weight (equivalent to 0.040 moles of tri-ammonium phosphate $(NH_3)_3PO_4$), are charged into a three-necked flask, equipped with a rod stirrer and a bubble cooler. 50.8 g of an aqueous solution at 40% by weight of tetrapropyl ammonium hydroxide (TPA-OH, 0.10 moles) and 8.13 g of aluminum tri-isopropoxide (0.04 moles) are added to the mixture thus prepared. The mixture is maintained under stirring at room temperature for about 60 minutes, until a limpid solution is obtained. 208 g of tetra-ethyl orthosilicate (TEOS; 1.00 moles) are rapidly added to this solution and the procedure is the same as in the previous example 1. At the end, an amorphous solid is obtained according to the present invention, identified by the following empirical formula: $SiAl_{0.02}P_{0.02}O_{2.08}$. which is characterized according to the above-mentioned techniques. The morphological data are shown in Table 1 below.

The structure of the solid catalysts obtained in accordance with the previous examples 2 to 5 was determined, as for the product obtained in accordance with example 1, by means of X rays diffraction and NMR spectroscopy, and proved to be completely amorphous solids wherein at least 80% of phosphorus is bonded by means of Al-O-P links to the silico-alumina matrix.

Example 6 (comparative)

The procedure of Example 1 was repeated exactly, with the only difference that the P/Al ratio in the gel was equal to 5, instead of 1.

The structure of the solid thus obtained, determined by means of X-ray diffraction and NMR spectroscopy, proved to be analogous to that of the product of Example 1, but the pore structure was greatly modified, with a partial collapse of the same, as shown by the significant reduction in their volume.

Example 7 (comparative)

An amorphous silica-alumina solid support was prepared not containing phosphorus, repeating the same procedure as the previous Example 1, but without introducing the solution of tri-ammonium phosphate. The results of the characterization are summarized in Table 1 below. A significant reduction in the average pore diameter is observed.

Table 1: Morphological properties of the catalysts

| Example | Si/Al | P/Al | $S_{BET}$ ($m^2$/g) | Vp (ml/g) | $d_{DFT}$ (nm) |
|---------|-------|------|---------------------|-----------|----------------|
| 1 | 50 | 1.0 | 700 | 0.96 | 6.1 |
| 2 | 50 | 0.5 | 720 | 0.84 | 5.3 |
| 3 | 50 | 2.0 | 520 | 1.62 | 25.0 |
| 4 | 50 | 2.0 | 760 | 1.57 | 13.0 |
| 5 | 25 | 1.0 | 500 | 1.35 | 19.0 |
| 6 (comp.) | 50 | 5 | 80 | 0.06 | - |
| 7 (comp.) | 50 | 0 | 760 | 0.49 | 2.3 |

Example 8: extruded catalyst

5 kg of a humid gel prepared by exactly repeating the procedure of the previous Example 1, but omitting the drying and calcination step, 1.466 kg of alumina (pseudo-bohemite, VERSAL 150), previously dried for 3 hours in air at 150°C, and 0.205 kg of methyl cellulose are charged into a 10 litre plough mixer, maintained at a stirring rate of 70-80 revs per minute, and the mixture is left under stirring for about 1 hour. 50 ml of glacial acetic acid are then added and the temperature of the mixer is brought to about 60°C, continuing the stirring until a homogeneous paste is obtained, having the desired consistency for the subsequent extrusion. The mixture is charged into an extruder of the HUTT type, extruded and cut into cylindrical pellets of the desired size (about 2 x 4 mm). The product is left to rest for about 6-8 hours and then dried by maintaining it in a stream of air at 100°C for 5 hours. It is finally calcined in a muffle at 550°C for 5 hours in a stream of air.

A porous extruded solid is thus obtained, with acidic characteristics (indicated hereunder with the term "extruded product" for the sake of simplicity), essentially consisting of an amorphous silica/alumina/phosphate phase (60% by weight, by means of X-ray diffraction) and an alumina crystalline phase (pseudo-bohemite), whose morphological characteristics are specified in Table 2 below.

Examples 9, to 12 and 13 (comparative)

The same procedure was repeated as the previous Example 8, but substituting the amorphous solid prepared according to Example 1 with the solids prepared according to the respective examples as indicated in the second column of Table 2 below.

Porous extruded solids are thus obtained, whose morphological characteristics are specified in Table 2.

Table 2: Morphological properties of the extruded products

| Example | Amorphous phase (Example Nr.) | P/Al | $S_{BET}$ (m$^2$/g) | Vp (ml/g) | $d_{DFT}$ (nm) |
|---------|-------------------------------|------|---------------------|-----------|----------------|
| 8 | 1 | 1 | 540 | 0.91 | 7.6 |
| 9 | 3 | 2 | 460 | 1.26 | 18.0 |
| 10 | 4 | 2 | 510 | 1.25 | 16.0 |
| 11 | 2 | 0.5 | n.d. | n.d. | n.d. |
| 12 | 5 | 1 | 400 | 1.12 | 18.0 |
| 13 (comp) | 7 | 0 | 590 | 0.88 | < 6.0 |

EXAMPLE 14: formation of a hydrocracking catalyst based on platinum

In order to demonstrate the advantageous properties of the amorphous solid of the present invention as a catalytically active support in hydro-treatment processes of hydrocarbons, a hydrocracking catalyst was prepared, containing platinum as hydro-dehydrogenation metal.

In order to disperse the platinum on the support an aqueous solution of hexachloroplatinic acid ($H_2PtCl_6$), hydrochloric acid and acetic acid was used in the following molar ratios: $H_2PtCl_6$/HCl/$CH_3$COOH = 1/0.84/0.05, having a platinum concentration of $7.69 \cdot 10^{-3}$ M. 60 ml of this solution were added to 30 g of the extruded solid, obtained according to the previous Example 8, so that the whole solid was covered by the solution, in order to avoid heterogeneity in the platinum distribution. The suspension thus obtained was maintained under stirring for about an hour and then degassed by suction under vacuum (about 1 kPa) at room temperature. The solvent was subsequently removed by heating to about 70°C in a stream of air. The dry product was finally calcined in a stream of air with the following temperature profile 25-350°C in 2 hours, to 350°C for 2 hours, 350-400°C in 50 min., to 400°C for 3 hours.

At the end, a supported catalyst for hydrocracking is obtained, having the following characteristics:

```
59.8% by weight of active amorphous solid (molar ratio

Si/Al = 51, P/Al = 1)
```

39.9% by weight of gamma-alumina
0.3% by weight of platinum

EXAMPLES 15, 16 and 17 (comparative)

A further three samples of hydrocracking catalyst were prepared, exactly repeating the procedure of the previous Example 14, but using the extruded products according to Examples 9, 10 and 13 (comparative), in Examples 15, 16 and 17 (comparative), respectively. The composition characteristics relating to amorphous phase, gamma-alumina and platinum content of the catalysts obtained are essentially the same as Example 14, whereas the morphological measurements are specified in Table 3 below.

Table 3: morphological characteristics of the catalysts with 0.3% Pt

| Example | P/Al | $S_{BET}$ (m²/g) | Vp (ml/g) | $d_{DFT}$ (nm) |
|---|---|---|---|---|
| 14 | 1 | 490 | 0.84 | 7.3 |
| 15 | 2 | 430 | 1.12 | 15.0 |
| 16 | 2 | 470 | 1.02 | 16.0 |
| 17 (comp) | 0 | 510 | 0.82 | n.d. |

EXAMPLE 18

120 ml of the aqueous solution of hexachloroplatinic acid used in the previous examples ($H_2PtCl_6$/HCl/$CH_3COOH$ = 1/0.84/0.05, [Pt] = 7.69•10⁻³ M), were added to 30 g of the extruded solid obtained according to the previous Example 8, so that the whole solid is covered by the solution, in order to avoid heterogeneity in the platinum distribution. The suspension thus obtained was treated with the same procedure described in the previous Example 14, to obtain at the end, after calcination, a supported catalyst for hydrocracking, having the following characteristics:

```
59.8% by weight of active amorphous solid (molar ratio

Si/Al = 51, P/Al = 1)
```

39.9% by weight of gamma-alumina
0.59% by weight of platinum

Examples 19, 20 and 21 (comparative)

Three further samples of catalyst for hydrocracking were prepared, containing 0.6% by weight of platinum, by exactly repeating the process of the previous example 18, but using the extruded products in accordance with the examples 11, 12 and 13 (comparative), in the examples 19, 20 and 21 (comparative), respectively. The composition characteristics relating to amorphous phase, gamma-alumina and platinum content of the catalysts obtained are essentially the same as Example 18, whereas the morphological characteristics do not significantly differ from those of the original active support.

EXAMPLES 22 to 26: catalytic activity tests in the hydrocracking reaction of paraffinic waxes.

In order to verify the advantages of the catalytically active solid of the present invention when used as active support, various hydrocracking tests were carried out on a mixture of paraffins with a melting point higher than room temperature, using the catalysts of the previous Examples 14 to 18.
The hydrocracking tests were effected in a fixed bed tubular reactor having a useful charge volume of 15 ml, corresponding to a height of the catalytic bed in the isotherm section of about 10 cm. The reactor is equipped with suitable connections for the continuous cocurrent feeding of the reagents and the collection of the reaction mixture. Hydrogen is fed at the desired pressure by means of a mass flow meter; the mixture of paraffins is maintained in the liquid state at a temperature of about 110°C and fed by means of a pump.
The temperature of the reactor is controlled by means of a thermostat system capable of operating at up to 400°C. An adequate analytical instrumentation is connected on line for analysis in real time of the composition of the reaction product.
8 g of catalyst are charged into the reactor and activated according to the method described above.
A mixture of paraffins is used as feeding, obtained by mixing pure linear paraffins or mixtures with a very narrow distribution, having the following composition:

| | |
|---|---|
| Fraction < 150°C | absent |
| Kerosene (from 150 to 260°C) | 29.0 |
| Gas oil (from 260 to 370°C) | 25.7 |

(continued)

| Fraction < 150°C | absent |
|---|---|
| Fraction > 370°C | 45.3 |

Various hydrocracking tests were carried out on said paraffinic composition, at a total pressure of about 5 MPa and a weight ratio hydrogen/(hydrocarbon mixture) of about 0.1. Table 4 below indicates the experimental conditions and catalysts used in Examples 22 to 26. The contact time (1/WHSV) was regulated according to the usual technique in order to have the desired conversion degrees at the end.

Table 4: Process conditions

| Conditions | Ex. 22 | Ex. 23 | Ex. 24 | Ex. 25 | Ex. 26(*) |
|---|---|---|---|---|---|
| Temperature (°C) | 335 | 340 | 333 | 340 | 353 |
| $H_2$/waxes (w/w) | 0.10 | 0.13 | 0.113 | 0.11 | 012 |
| Pressure (MPa) | 5.0 | 5.0 | 5.0 | 4.75 | 4.75 |
| Catalyst (Ex.Nr) | Ex. 14 | Ex. 15 | Ex. 16 | Ex. 18 | Ex. 17 (comp) |
| P/Al | 1 | 2 | 2 | 2 | 0 |
| WHSV ($h^{-1}$) | 1 | 1.5 | 3 | 1.5 | 2 |
| (*) comparative | | | | | |

A fractionation was effected on the outgoing mixture by means of gas-chromatographic analysis, and on this basis, the conversion degree is measured of the hydrocarbon fraction having more than 22 carbon atoms $C_{22}+$, corresponding, more or less, to the fraction with a boiling point > 370°C. Table 5 below indicates the composition data relating to the yields in the various distillation cuts obtained at the end of the process.

An aliquot of the hydrocracking products is distilled at 360°C and the content of lubricating base is determined on the residue, according to the method explained herebelow. The 360+ residue is dissolved at 40°C in a 1/1 vol/vol mixture of methyl-ethylketone and toluene. The (solvent)/(360+ residue) ratio is 4/1 vol/vol; an aliquot of the solvent (about 1/8 of the total) is used in the washing step of the paraffin collected on the filter. The temperature of the solution is lowered to -20°C at a rate of 1°C/min. At the end, the mixture is filtered at a temperature of -20°C. The de-waxed product is separated from the solvent by distillation under vacuum and subsequent stripping in a stream of nitrogen at 80°C.

The quantity of product obtained, is measured to determine the content of lubricating base of said 360+ residue. The lubricating base is then characterized by measuring the viscosity at 100°C and the viscosity index. The results are indicated in Table 5 below, which clearly demonstrates the surprising improvements obtained with the catalytically active support of the present invention, with respect to a silica-alumina support having an analogous composition but not containing phosphorus. In particular, according to Examples 22 to 25 according to the present invention, it is possible to obtain, by means of a single hydrocracking step, a high yield to middle distillates (columns 150-260 and 260-370) and a high-boiling residue containing over 80% by weight of lubricating base having a much higher viscosity than that obtained under the same process conditions with a catalyst of the known art (comparative Example 26).

Table 5: Composition and properties of the hydrocracking products.

| Ex. | Temp. (°C) | WHSV ($h^{-1}$) | $C_{22}+$ conversion | Yields to hydrocracking products (w%) | | | | Lubricating base | | |
|---|---|---|---|---|---|---|---|---|---|---|
| | | | | (distillation ranges of fractions in °C) | | | | Yield % on the 360+°C residue | Viscosity at 100°C (cSt) | Viscosity index |
| | | | | < 150 | 150-260 | 260-370 | > 370 | | | |
| 22 | 335 | 1 | 78.7 | 7.2 | 42.5 | 40.7 | 9.6 | 89 | 4.33 | 147 |
| 23 | 340 | 1.5 | 72.3 | 6.6 | 40.8 | 40.1 | 12.5 | 88 | 4.47 | 135 |
| 24 | 338 | 1.5 | 74.5 | 7.6 | 43.7 | 37.2 | 11.5 | 92 | 4.31 | 145 |
| 25 | 333 | 3 | 79.0 | 10.8 | 43.5 | 36.2 | 9.5 | 84 | 4.27 | 142 |

(continued)

| Ex. | Temp. (°C) | WHSV (h$^{-1}$) | C$_{22}$+ conversion | Yields to hydrocracking products (w%) | | | | Lubricating base | | |
|---|---|---|---|---|---|---|---|---|---|---|
| | | | | (distillation ranges of fractions in °C) | | | | Yield % on the 360+°C residue | Viscosity at 100°C (cSt) | Viscosity index |
| | | | | < 150 | 150-260 | 260-370 | > 370 | | | |
| 26 (*) | 352 | 2 | 83 | 9.3 | 40.5 | 42.5 | 7.7 | 91 | 2.73 | 143 |
| (*) Comparative | | | | | | | | | | |

## Claims

1. Process for the hydrotreatment of hydrocarbons **characterised in that** it is carried out in the presence of a solid catalyst comprising:

   (A) a support of an acidic nature consisting of a porous catalytically active solid, including silicon, aluminum, phosphorus and oxygen bonded to one another in such a way as to form a mixed amorphous solid forming a single phase, **characterized by** a Si/Al atomic ratio of between 20 and 250, a P/Al ratio of at least 0.1 and not higher than 3.5, a total pore volume ranging from 0.5 to 2.0 ml/g, calculated using the Gurvitsch method at p/p° = 0.995, with an average pore diameter ranging from 3 to 40 nm determined by means of the Density Functional Theory method, and a specific surface area ranging from 200 to 1000 m$^2$/g evaluated by means of the BET linear graph with two parameters within the range of p/p° 0.01-0.2 applying the Density Functional Theory method;
   (B) at least one metal with a hydro-dehydrogenating activity selected from groups 6 to 10 of the periodic table of elements, dispersed on said support (A) in an amount of between 0.05 to 5% by weight with respect to the total weight of the catalyst.

2. The process according to claim 1, wherein in the solid catalyst said active support has a total pore volume ranging from 0.7 to 1.7 ml/g, a surface area ranging from 300 to 900 m$^2$/g and an average pore diameter ranging from 5 nm to 30 nm, a Si/Al ratio of between 20 and 200, a P/A1 ratio of between 0.3 and 3.5.

3. The process according to any of the claims 1 and 2, wherein in the solid catalyst the difference between 10% and 90% of the pore sizes in the distribution curve of said active support, is within a range of diameters from 2 to 40 nm.

4. The process according to any of the previous claims, wherein the solid catalyst preferably comprises, in addition to said active support (A), a binder consisting of an inert inorganic solid.

5. The process according to the previous claim 4, wherein in the solid catalyst said inert binder is selected from silica, alumina, clay, titanium oxide (TiO$_2$) or zirconium oxide (ZrO$_2$), boron oxide (B$_2$O$_3$) or mixtures thereof.

6. The process according to the previous claims 4 and 5, wherein in the solid catalyst said binder is in an amount of 1 to 70% by weight, preferably from 20 to 50% by weight, with respect to said inert inorganic binder and said amorphous support (A).

7. The process according to any of the previous claims 4 to 6, wherein the solid catalyst is in the form of pellets having a size of about 2-5 mm in diameter and 2-10 mm in length.

8. The process according to any of the previous claims, wherein in the solid catalyst said metal in component (B) is selected from nickel, molybdenum, tungsten, cobalt, platinum, palladium and mixtures thereof.

9. The process according to the previous claim 8, wherein in the solid catalyst said metal is selected from platinum and palladium and any combination of nickel or cobalt with chromium, molybdenum or tungsten.

10. The process according to any of the previous claims, wherein in the solid catalyst the concentration of said metal having a hydro-dehydrogenating activity is between 0.2 and 1% by weight with respect to the total weight of the catalyst.

11. The process according to claim 1, wherein said hydro-treatment process comprises a hydrocracking.

12. The process according to one of claims 1 or 11, comprising a hydrocracking step of mainly paraffin mixtures, for the production of fuels and/or lubricating bases.


**Patentansprüche**

1. Verfahren für die Wasserstoffbehandlung von Kohlenwasserstoffen **dadurch gekennzeichnet, dass** das Verfahren in der Gegenwart eines Feststoffkatalysators durchgeführt wird, umfassend:

(A) Träger saurer Beschaffenheit bestehend aus einem porösen katalytisch aktiven Feststoff, einschließlich Silizium, Aluminium, Phosphor und Sauerstoff, die so miteinander verbunden sind, um einen gemischten amorphen Feststoff der eine einzelne Phase bildet zu bilden, **gekennzeichnet durch** ein Si/Al Atomverhältnis von zwischen 20 und 250, ein P/Al-Verhältnis von mindestens 0,1 und nicht höher als 3,5, ein Gesamtporenvolumen im Bereich von 0,5 bis 2,0 ml/g, berechnet unter Verwendung des Gurvitsch-Verfahrens bei p/p° = 0,995, mit einem durchschnittlichen Porendurchmesser im Bereich von 3 bis 40 nm mit Hilfe des Dichtefunktionaltheorie-Verfahrens bestimmt, und einer spezifischen Oberfläche im Bereich von 200 bis 1000 m$^2$/g evaluiert mit Hilfe des linearen BET-Graphen mit 2 Parametern innerhalb des Bereichs von p/p° 0,01-0,2 unter Anwendung des Dichtefunktionaltheorie-Verfahrens;
(B) mindestens ein Metall mit einer Wasserstoff-dehydrierenden Aktivität ausgewählt aus den Gruppen 6 bis 10 des Periodensystems der Elemente, dispergiert auf dem Träger (A) in einer Menge von zwischen 0,05 bis 5 Gewichtsprozent bezogen auf das Gesamtgewicht des Katalysators.

2. Verfahren nach Anspruch 1, wobei in dem Feststoffkatalysator der aktive Träger ein Gesamtporenvolumen im Bereich von 0,7 bis 1,7 ml/g aufweist, eine Oberfläche im Bereich von 300 bis 900 m$^2$/g und einen durchschnittlich Porendurchmesser im Bereich von 5 nm bis 30 nm, ein Si/Al Verhältnis von zwischen 20 und 200, ein P/Al Verhältnis von zwischen 0,3 und 3,5.

3. Verfahren nach einem beliebigen der Ansprüche 1 und 2, wobei in dem Feststoffkatalysator die Differenz zwischen 10% und 90% der Porengrößen in der Verteilungskurve des aktiven Trägers innerhalb eines Durchmesserbereichs von 2 bis 40 nm liegt.

4. Verfahren nach einem beliebigen der vorhergehenden Ansprüche, wobei der Feststoffkatalysator vorzugsweise, zusätzlich zu dem aktiven Träger (A), ein Bindemittel bestehend aus einem inerten anorganischen Feststoff umfasst.

5. Verfahren nach dem vorhergehenden Anspruch 4, wobei in dem Feststoffkatalysator das inerte Bindemittel ausgewählt ist aus Siliziumdioxid, Aluminiumoxid, Ton, Titanoxid (TiO$_2$) oder Zirkonoxid (ZrO$_2$), Boroxid (B$_2$O$_3$) oder Mischungen davon.

6. Verfahren nach den vorhergehenden Ansprüchen 4 und 5, wobei in dem Feststoffkatalysator das Bindemittel in einer Menge von 1 bis 70 Gewichtsprozent, vorzugsweise von 20 bis 50 Gewichtsprozent, bezogen auf das inerte anorganische Bindemittel und den amorphen Träger (A) vorliegt.

7. Verfahren nach einem beliebigen der vorhergehenden Ansprüche 4 bis 6, wobei der Feststoffkatalysator in der Form von Pellets mit einer Größe von etwa 2-5 mm im Durchmesser und 2-10 Länge vorliegt.

8. Verfahren nach einem beliebigen der vorhergehenden Ansprüche, wobei in dem Feststoffkatalysator das Metall in Komponente (B) ausgewählt ist aus Nickel, Molybdän, Wolfram, Kobalt, Platin, Palladium und Mischungen davon.

9. Verfahren nach dem vorhergehenden Anspruch 8, wobei in dem Feststoffkatalysator das Metall ausgewählt ist aus Platin und Palladium und einer beliebigen Kombination aus Nickel oder Kobalt mit Chrom, Molybdän oder Wolfram.

10. Verfahren nach einem beliebigen der vorhergehenden Ansprüche, wobei in dem Feststoffkatalysator die Konstellation des Metalls mit einer Wasserstoff-dehydrierenden Aktivität zwischen 0,2 und 1 Gewichtsprozent bezogen auf das Gesamtgewicht des Katalysators ist.

**11.** Verfahren nach Anspruch 1, wobei das Wasserstoffbehandlungsverfahren Hydrocracken umfasst.

**12.** Verfahren nach einem beliebigen der Ansprüche 1 oder 11, umfassend einen Schritt des Hydrocrackens von hauptsächlich paraffinen Mischungen, für die Herstellung von Brennstoffen und/oder schmierenden Basen.

**Revendications**

**1.** Procédé d'hydrotraitement d'hydrocarbures, **caractérisé en ce qu'**il est réalisé en présence d'un catalyseur solide comprenant:

(A) un support de nature acide constitué d'un solide poreux catalytiquement actif, notamment de silicium, d'aluminium, de phosphore et d'oxygène liés les uns aux autres de manière à former un solide amorphe mélangé formant une seule phase, **caractérisé par** un rapport atomique Si/Al situé entre 20 et 250, un rapport P/Al d'au moins 0,1 et d'au plus 3,5, un volume total de pore de 0,5 à 2,0 ml/g, calculé au moyen de la méthode de Gurvitsch à p/p° = 0,995, avec un diamètre moyen de pore de 3 à 40 nm déterminé par la méthode de la théorie de la fonctionnelle de la densité, et une surface spécifique de 200 à 1000 $m^2$/g évaluée au moyen du graphique linéaire BET avec deux paramètres dans la plage de p/p° allant de 0,01 à 0,2 en appliquant la méthode de la théorie de la fonctionnelle de la densité ;

(B) au moins un métal possédant une activité d'hydro-déshydrogénation choisis dans les groupes 6 à 10 du tableau périodique des éléments, dispersé sur ledit support (A) en une quantité de 0,05 % à 5 % en poids par rapport au poids total du catalyseur.

**2.** Procédé selon la revendication 1, dans lequel dans le catalyseur solide, ledit support actif présente un volume total de pore de 0,7 à 1,7 ml/g, une surface de 300 à 900 $m^2$/g et un diamètre moyen de pore de 5 nm à 30 nm, un rapport Si/Al entre 20 et 200, un rapport P/Al entre 0,3 et 3,5.

**3.** Procédé selon l'une quelconque des revendications 1 et 2, dans lequel dans le catalyseur solide, la différence entre 10 % et 90 % des tailles de pore dans la courbe de distribution dudit support active est située dans la plage de diamètres allant de 2 à 40 nm.

**4.** Procédé selon l'une quelconque des revendications précédentes, dans lequel le catalyseur solide comprend de préférence, en plus dudit support actif (A), un liant constitué d'un solide inorganique inerte.

**5.** Procédé selon la revendication 4 précédente, dans lequel dans le catalyseur solide, ledit liant inerte est choisi parmi la silice, l'alumine, l'argile, l'oxyde de titane ($TiO_2$) ou l'oxyde de zirconium ($ZrO_2$), l'oxyde de bore ($B_2O_3$) ou leurs mélanges.

**6.** Procédé selon les revendications 4 et 5 précédentes, dans lequel dans le catalyseur solide, la quantité dudit liant est de 1 % à 70 % en poids, de préférence de 20 % à 50 % en poids, par rapport audit liant inorganique inerte et audit support amorphe (A).

**7.** Procédé selon l'une quelconque des revendications 4 à 6 précédentes, dans lequel le catalyseur solide est sous la forme de granulés ayant une taille d'environ 2 à 5 mm de diamètre et de 2 à 10 mm de longueur.

**8.** Procédé selon l'une quelconque des revendications précédentes, dans lequel dans le catalyseur solide, ledit métal dans le composant (B) est choisi parmi le nickel, le molybdène, le tungstène, le cobalt, le platine, le palladium et leurs mélanges.

**9.** Procédé selon la revendication 8 précédente, dans lequel dans le catalyseur solide, ledit métal est choisi parmi le platine et le palladium et toutes les combinaisons du nickel ou du cobalt avec le chrome, le molybdène ou le tungstène.

**10.** Procédé selon l'une quelconque des revendications précédentes, dans lequel dans le catalyseur solide, la concentration dudit métal possédant une activité d'hydro-déshydrogénation est de 0,2 % à 1 % en poids par rapport au poids total du catalyseur.

**11.** Procédé selon la revendication 1, dans lequel ledit procédé d'hydrotraitement comprend un hydrocraquage.

12. Procédé selon la revendication 1 ou 11, comprenant une étape d'hydrocraquage de mélanges contenant principalement des paraffines, pour la production de carburants et/ou de bases de lubrification.

# Fig. 1

EP 1 641 561 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 0529923 A
- EP 1101813 A
- EP 160145 A
- EP 340868 A
- EP 659478 A
- EP 550922 A
- EP 665055 A
- EP 582347 A

### Non-patent literature cited in the description

- **J. SCHERZER ; A. J. GRUIA.** Hydrocracking Science and Technology. Marcel Dekker, Inc, 1996
- *Journal of Catalysis,* 1969, vol. 60, 156-166
- **P.A. WEBB ; C. ORR.** Analytical Methods in Fine Particle Technology. Micrometrics Instruments Corp, 1997, 81